# EUROPÄISCHE PATENTSCHRIFT

(11) **EP 2 625 122 B1**
(45) Veröffentlichungstag und Bekanntmachung des Hinweises auf die Patenterteilung: **18.06.2014**
(21) Anmeldenummer: 11757298.2
(22) Anmeldetag: 14.09.2011
(51) Int. Cl.: B65G 21/14, B65G 47/31

(54) **BANDFÖRDERER MIT LÄNGENVERÄNDERBARER BANDUNTERSTÜTZUNG**
CONVEYOR BELT PROVIDED WITH A SUPPORT ELEMENT OF ADJUSTABLE LENGTH
BANDE CONVOYEUSE MUNIE D'UN ELEMENT SUPPORT A LONGUEUR REGLABLE

(30) Priorität: 07.10.2010 DE 102010047562
(43) Veröffentlichungstag der Anmeldung: 14.08.2013
(73) Patentinhaber: Hochland SE, 88178 Heimenkirch (DE)
(72) Erfinder: BIGGEL, Andreas, 88145 Hergatz (DE)
(74) Vertreter: Braun-Dullaeus, Karl-Ulrich
(86) Internationale Anmeldenummer: PCT/EP2011/065899
(87) Internationale Veröffentlichungsnummer: WO 2012/045553

(56) Entgegenhaltungen:
- EP-A1- 0 433 231
- EP-A1- 1 043 250
- EP-A2- 0 304 979
- DE-U1- 7 826 035

## Beschreibung

Die Erfindung betrifft einen Bandförderer zur Beförderung vereinzelter Produkte, insbesondere von Lebensmitteln wie Stapeln von Schmelzkäsescheiben, die insbesondere von vorgegebener Abmessung in einer Transportrichtung sind, wobei der Bandförderer zwei an einer Übergabestelle aneinander angrenzende Oberbandabschnitte aufweist, die eine in Transportrichtung variable Länge haben und die sich jeweils von einer an der Übergabestelle ausgebildeten inneren Umlenkung bis zu einer am anderen Ende ausgebildeten äußeren Umlenkung erstrecken.

Derartige Bandfördervorrichtungen mit einer verschieblichen Übergabestelle zwischen zwei Oberbandabschnitten zur Änderung der Längen sind an sich bekannt. Wie beispielsweise die Vorrichtung, die in dem DE 43 41 044 gezeigt ist, werden diese in Lebensmittel verarbeitenden Betrieben zur "Formatierung" eingesetzt, um in ungleichmäßigen Abstand auf dem Band aufliegende Produkte in gleichmäßiger Folge auf dem Austrageabschnitt des Förderbandes aufzureihen oder um einzelne Packen aus einer gleichmäßigen Aufreihung von Produkten auf dem Einlaufabschnitt zu vereinzeln. Zudem sei auf die DE 691 92 859 und die DE 1 456 521 hingewiesen, die solche Bandförderer zeigen, die jeweils Förderbänder mit verschieblicher Übergabestelle und mit jeweils einer die Förderbänder unterstützenden Kette mit gleichmäßig beabstandeten Rollen aufweisen. Mittels der verschieblichen Übergabestelle kann auch hier eine gewisse Pufferwirkung für die transportierten Gegenstände, beispielsweise verpackte Lebensmittel, erreicht werden.

Auch in der DE 10 2009 019 462 ist eine solche Vorrichtung gezeigt, mit der es möglich ist, aus einer Reihe zunächst untereinander beabstandeter Produkte jeweils eine bestimmte Anzahl heraus zu greifen und zu Gesamtpacken definierter Größe "zusammen zu schieben". Auch mit dieser Vorrichtung ist es möglich, durch einen zeitweisen Rückhalt der Produkte ein gewisses Maß an "Pufferung" im Strom der Produkte zu erreichen.

Problematisch an den bekannten Vorrichtungen ist allerdings, dass ihre Flexibilität bezüglich der veränderlichen Länge der Oberbandabschnitte begrenzt ist. Insbesondere können die Oberbandabschnitte nicht über ein bestimmtes Maß hinaus verlängert werden, ohne dass diese durch das Gewicht der aufliegenden Produkte in einem unakzeptablen Maß durchhängen. Ein solches Durchhängen beeinträchtigt nicht nur die Funktion der Pufferung, sondern vor allem die Funktion der definierten Formatierung.

Ein weiteres Problem ist, dass die bekannten Fördereinrichtungen nur bedingt für den Transport unverpackter Lebensmittel geeignet sind, die unmittelbar auf der Oberfläche der Förderbänder aufliegen. Schließlich weisen alle bekannten Fördereinrichtungen an irgendeiner Stelle eine Umlenkwalze auf, die das Förderband auf dieser Oberfläche beaufschlagt. Da mit der Auflage dieser Umlenkwalze Verunreinigungen auf das Band gelangen können, ist ein erhöhter Aufwand zur Einhaltung der Sauberkeit und der Hygiene notwendig.

Aufgabe der vorliegenden Erfindung ist es daher, eine mit technisch einfachen Mitteln zu realisierende Vorrichtung vorzuschlagen, die den Durchhang der Förderbänder auf ein Minimum reduziert und somit eine erhöhte Flexibilität in der verstellbaren Länge bei hoher Fördergeschwindigkeit bietet.

Diese Aufgabe wird durch das Verfahren mit den kennzeichnenden Merkmalen des Anspruch 1 gelöst. Besondere Ausführungsformen sind in den Unteransprüchen genannt.

Demnach liegt der Erfindung der Gedanke zu Grunde, die Oberbandabschnitte des Bandförderers von unten mit Stützmitteln abzustützen, wobei sich der Abstand der Stützmittel der Längenänderung der Oberbandabschnitte anpasst, so dass unabhängig von der Längenänderung jederzeit eine möglichst homogene Unterstützung der Oberbandabschnitte gegeben ist. Dabei ist es für die Realisierung dieses Erfindungsgedankens zunächst unerheblich, ob die beiden aneinandergrenzenden Oberbandabschnitte von einem einzigen entsprechend umgelenkten Band oder von zwei unabhängigen Bändern ("Riemen") gebildet werden. Erfindungsgemäß werden die beiden Oberbandabschnitte somit jeweils von mehreren solchen in Transportrichtung zueinander beabstandeten Stützmitteln gestützt, deren Abstände sich mit Variation der Länge der Oberbandabschnitte verändern. Auf diese Weise kann durch eine mehr oder weniger homogene Unterstützung der durch die Auflage der Produkte belasteten Oberbandabschnitte deren Durchhang effektiv reduziert werden.

Im Hinblick auf eine besonders hohe Anforderung an die Hygiene ist es vorteilhaft, wenn der Bandförderer zwei unabhängige Förderbänder aufweist. Das macht es möglich, die Längenänderung der Oberbänder durch einen Eingriff einfacher Spannwalzen in die Unterbänder zu bewerkstelligen, wobei diese Spannwalzen lediglich die Innenseiten der Förderbänder beaufschlagen. Eine solche Anordnung ist frei von Walzen, welche die Förderbänder auf der Seite beaufschlagen, auf der das Produkt transportiert wird. Insofern eignen sich diese Bandförderer ganz besonders für den Einsatz in der Lebensmittelindustrie und dort für den Transport unverpackter Lebensmittel.

Solchermaßen erfindungsgemäß ausgestattete Bandförderer können besonders vorteilhaft zur Formatierung von Produkten im Vorfeld der Verpackung der formatierten Stapel definierter Größe, beispielsweise der Stapel von Schmelzkäsescheiben, eingesetzt werden.

Dabei ist es im Hinblick auf die Minimierung des Durchhangs ganz besonders vorteilhaft, die Vorrichtung insofern an das spezielle zu transportierende Produkt anzupassen, als die Abstände zwischen den einzelnen Stützmitteln auf einen maximalen Abstand begrenzt sind, der höchstens so groß ist, wie die Länge des auf dem Oberbandabschnitt aufliegenden Produktes. Auf diese Weise wird vermieden, dass das Produkt ohne eine Unterstützung transportiert wird. Wenn also beispielsweise Stapel von Schmelzkäsescheiben mit quadratischen Abmessungen von 10 cm transportiert werden, sollte jeder Oberbandabschnitt zumindest alle 10 cm von einem Stützmittel unterstützt sein. Für die Flexibilität der Vorrichtung ist es natürlich von Vorteil, möglichst viele Stützmittel vorzusehen, wobei deren Anzahl dadurch begrenzt ist, dass alle unter einen auf seine minimale Länge reduzierten Oberbandabschnitt passen müssen. Insofern sind die Stützmittel idealer Weise auch so auszubilden, dass sie sich in möglichst kleiner Packung zusammenschieben lassen.

Zur Reduzierung der Reibung haben die Stützmittel in einer vorteilhaften Ausführungsform Stützwalzen, auf denen das Band oder der Gurt des jeweiligen Oberbandabschnittes aufliegt. Diese Stützwalzen sind jeweils drehbar auf einem entlang einer Führung geführten und in Transportrichtung verschieblichen Walzenträger und auf diesem insbesondere auf einer einseitig aufgehängten entsprechend vertikal ausgerichteten Achse drehbar gelagert. Bei einer solchen einseitigen Aufhängung der Stützwalzen muss eine Verdrehsicherheit der Walzenträger gewährleistet sein.

In einer besonders einfach aufgebauten und damit robusten und leicht zu reinigenden Ausführungsform sind die Walzenträger all derjenigen einen Oberbandabschnitt unterstützenden Walzen untereinander über Mitnahmemittel gekoppelt, die den jeweiligen Abstand zwischen zwei solchermaßen gekoppelten Walzenträgern auf den maximalen Abstand begrenzen. Diese Mitnahmemittel können so konzipiert sein, dass sich die Walzenträger beim Ausfahren des Oberbandabschnittes ohne einen besonderen Antrieb gegenseitig mitnehmen. Der Mitnahmemechanismus kann in der Art eines Fächers gestaltet sein, so dass bei Verlängerung des Oberbandabschnittes der erste Walzenträger von der Bewegung der Übergabestelle mitgenommen wird, während die anderen Walzenträger zunächst unbewegt bleiben. Insbesondere mit Erreichen des maximalen Abstandes zieht dann der erste Walzenträger den nächsten Walzenträger mit sich mit. Dieser Vorgang wiederholt sich, bis letztendlich alle Walzenträger ausgefahren sind.

Auf diese Weise wird eine mit der sich verändernden Bandlänge mitlaufende Bandunterstützung gewährleistet. Dabei ist die Bandunterstützung eben und symmetrisch, so dass der Bandlauf und der Produkttransport nicht beeinflusst werden. Eine Besonderheit dieser Art des Mitnahmemechanismus ist auch, dass es keines zusätzlichen Antriebes bedarf und dass für das Auffächern nur ein geringer Kraftaufwand nötig ist.

Auf der anderen Seite ist es für die reibungslose Funktion vorteilhaft, zwischen den Walzenträgern Distanzstücke vorzusehen, die bei Verkürzung des Oberbandabschnittes das Unterschreiten eines definierten minimalen Abstandes zwischen den einzelnen Walzenträgern verhindern. Vorteilhafterweise werden die Walzenträgern und die Distanzstücke dabei so konzipiert, dass der Stapel der Walzenträgern im zusammengeschobenen Zustand eine möglichst geringe Länge aufweist.

Mit der Erfindung lässt sich insgesamt auf kostengünstige Weise ein kompakter und dabei einfach zu reinigender Aufbau eines solchen Bandförderers mit längenveränderbarer Bandunterstützung erreichen

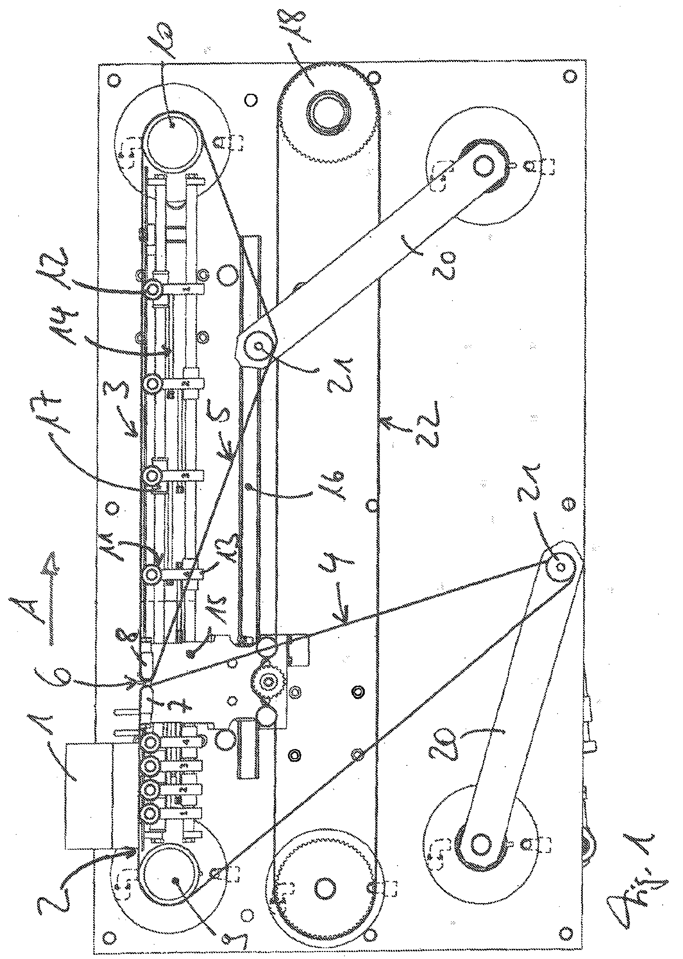

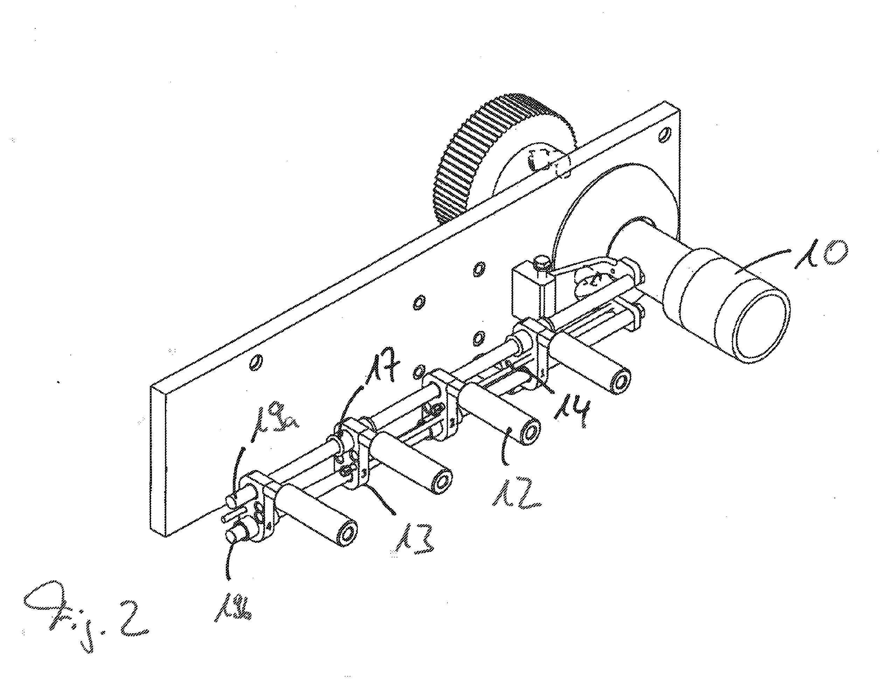

Nachfolgend wird die Erfindung anhand der Figuren 1 und 2 näher erläutert. Es zeigen:
- **Figur 1:**: eine erfindungsgemäße Vorrichtung in Seitenansicht und
- **Figur 2:**: eine perspektivische Ansicht eines Teiles der Vorrichtung.

In Figur 1 ist eine komplette Vorrichtung ("Bandförderer") zur Beförderung vereinzelter Produkte in Seitenansicht gezeigt. Im vorliegenden Fall wird als Produkt ein Stapel 1 von Schmelzkäsescheiben in einer Transportrichtung (Pfeil A) transportiert. Die Stapel von Schmelzkäsescheiben haben in Transportrichtung eine definierte Abmessung von etwa 10 cm. Der Bandförderer hat zwei getrennte Förderbänder mit jeweils an einer Übergabestelle aneinander angrenzenden Oberbandabschnitten 2 und 3 variabler Länge, wobei als Oberbandabschnitte diejenigen Abschnitte der Transportbänder angesehen werden, auf deren Oberfläche die Produkte, hier die Stapel von Schmelzkäsescheiben, aufliegen. Im vorliegenden Fall werden die Oberbandabschnitte 2 und 3 von getrennten Bändern 4 und 5 ausgebildet. Eine Veränderung der Länge der Oberbandabschnitte 2 und 3 geht dabei jeweils mit einer entsprechend entgegengesetzten Längenänderung der Unterbandabschnitte 4 und 5 einher.

Die Oberbandabschnitte 2 und 3 erstrecken sich jeweils von einer an einer verschieblichen Übergabestelle 6 ausgebildeten inneren Umlenkung, jeweils in Form einer abgerundeten Kante oder einer mitlaufenden Messerkante 7 und 8, bis zu einer am anderen Ende ausgebildeten äußeren Umlenkung, die in diesem Fall jeweils von einer Antriebswalze 9 und 10 gebildet wird, über die das jeweilige Band 4 und 5 läuft. In der gezeigten Darstellung ist die Übergabestelle 6 ganz nach links gefahren, so dass der Oberbandabschnitt 2 des Einlaufbandes, auf dem die Produkte ankommen, in seiner Länge auf das Minimum verkürzt ist. Hingegen ist der Oberbandabschnitt 3 des Auslaufbandes, auf dem die Produkte den Bandförderer verlassen, auf seine maximale Länge ausgezogenen.

Aus Figur 1 ist zu erkennen, dass die Veränderung der Länge der Oberbandabschnitte 2 und 3 durch einen einfachen Eingriff jeweils einer nach Spannwalze 21 in den jeweiligen Unterbandabschnitte 4 und 5 unterstützt wird, wobei die Spannwalzen 21 teilweise senkrecht zur Förderrichtung - hier nach unten - verschieblich sind. Die Verschiebung der Spannwalzen 21 geschieht jeweils durch ein Spannmittel in Form eines verschwenkbaren Hebels 20. Im vorliegenden Fall geschieht das Verfahren der Übergabestelle durch einen nachfolgend zu beschreibenden Linearantrieb 16, so dass die sich in der Länge verändernden Unterbandabschnitte 4 und 5 durch die verschwenkbaren Hebel 20 lediglich auf Spannung gehalten werden. Die Spannwalze 21 ist jeweils am äußeren Ende eines Hebels 20 gehalten und greift in den jeweiligen Unterbandabschnitt 4, 5 ein, wobei sie lediglich die Unterseite des jeweiligen Förderbandes beaufschlagt. Die Hebel werden vermittels einer durch eine Pneumatik erzeugte Federkraft nach unten ausgelenkt und spannen den jeweiligen Unterbandabschnitt 4 oder 5.

Zu erkennen ist, dass die beiden Oberbandabschnitte 2 und 3 jeweils von mehreren, in diesem Falle von jeweils vier, in Transportrichtung zueinander beabstandeten Stützmitteln 11 gestützt werden, deren Abstände sich mit Variation der Länge der Oberbandabschnitte verändern. So sind die Stützmittel 11 bei dem Einlaufband zu einem Stapel zusammengeschoben, während der von den Stützmitteln 11 gebildete Fächer auf Seiten des Auslaufbandes komplett aufgefächert ist, wobei die Stützmittel 11 jeweils den maximalen Abstand zueinander haben. Wie ersichtlich, ist der maximale Abstand kleiner als die Länge des auf dem Oberbandabschnitt zu transportierenden Produktes 1.

Wie aus Figur 1 ersichtlich, weisen die Stützmittel Stützwalzen 12 auf, auf denen der jeweilige Oberbandabschnitt aufliegt. Jede Stützwalzen 12 ist drehbar auf einem in einer Führung geführten und in Transportrichtung verschieblichen Walzenträger 13 gehalten. Die Walzenträger 13 sind über Mitnahmemittel in Form von Gleitstangen 14 gekoppelt, die bei Erreichen des Maximalabstandes den nächsten Walzenträger mitnehmen und so den jeweiligen Abstand zwischen zwei gekoppelten Walzenträgern 13 auf den maximalen Abstand begrenzen. Die Funktionsweise ist derart, dass bei Verlängerung des Oberbandabschnittes der der inneren Umlenkung 7, 8 nächste Walzenträger durch den Anschlag der ersten Gleitstange folgt, während die verbleibenden Walzenträger zunächst unbewegt bleiben. Wenn der erste Walzenträger seinerseits den maximalen Abstand zum zweiten Walzenträger erreicht, wird dieser durch die sodann im Anschlag befindliche Gleitstange mitgenommen.

Zwischen den Walzenträgern 13 sind Distanzstücke 17 vorgesehen, die bei Verkürzung des Oberbandabschnittes das Unterschreiten eines definierten minimalen Abstandes zwischen den einzelnen Walzenträgern 13 verhindern.

Das Auffächern respektive das Zusammenschieben der Walzenträger 13 geschieht vermittels der Übergabestelle 6, die auf einem in einer wälzgelagerten Linearführung 16 verschieblichen Schlitten 15, der als Träger dient, angeordnet ist. Der Antrieb des Schlittens erfolgt über einen Zahnriemen 22, der von einer Zahnwalze 18 angesteuert ist. Mit einer Verschiebung des Schlittens wird eine Veränderung der Längen der Oberbandabschnitte bewirkt.

In Figur 2 ist ein Teil des Austragabschnittes des Bandförderers gezeigt, wobei auf die Darstellung des Bandes verzichtet wurde. Wie aus der Figur ersichtlich, gleiten die Walzenträger 13 auf zwei übereinander angeordneten Rundführungen19a und 19b. Zu erkennen ist auch, dass die Stützwalzen 12 jeweils drehbar auf einem entlang der Rundführungen 19 verschieblich geführten Walzenträger 13 an einer vertikal ausgerichteten Achse einseitig aufgehängt sind. Die beiden Rundführungen 19a und 19b gewährleisten die Verdrehsicherheit der Walzenträger.

## Patentansprüche

1. Vorrichtung zur Beförderung vereinzelter Produkte (1) von insbesondere vorgegebener Abmessung in einer Transportrichtung (A), wobei die Vorrichtung zwei an einer Übergabestelle (6) aneinander angrenzende Oberbandabschnitte (2, 3) aufweist, die eine in Transportrichtung variable Länge haben und die sich jeweils von einer an der Übergabestelle (6) ausgebildeten inneren Umlenkung (7, 8) bis zu einer am anderen Ende ausgebildeten äußeren Umlenkung (9, 10) erstrecken,
**dadurch gekennzeichnet,**
**dass** die beiden Oberbandabschnitte (2, 3) jeweils von mehreren, in Transportrichtung zueinander beabstandeten Stützmitteln (11) gestützt werden, deren Abstände sich mit Variation der Länge der Oberbandabschnitte (2, 3) verändern.

2. Vorrichtung nach Anspruch 1,
**dadurch gekennzeichnet,**
**dass** die Abstände der Stützmittel (11) auf einen maximalen Abstand begrenzt sind.

3. Vorrichtung nach Anspruch 1 oder 2,
**dadurch gekennzeichnet,**
**dass** die Stützmittel (11) Stützwalzen (12) aufweisen, auf denen der jeweilige Oberbandabschnitt (2, 3) aufliegt, wobei die Stützwalzen (12) jeweils drehbar auf einem in einer Führung (19) geführten und in Transportrichtung verschieblichen Walzenträger (13) gehalten sind.

4. Vorrichtung nach Anspruch 3,
**dadurch gekennzeichnet,**
**dass** die Walzenträger (13) der einen Oberbandabschnitt (2, 3) unterstützenden Walzen (12) über Mitnahmemittel (14) gekoppelt sind, die den jeweiligen Abstand zwischen zwei gekoppelten Walzenträgern (13) auf den maximalen Abstand begrenzen.

5. Vorrichtung nach Anspruch 4,
**dadurch gekennzeichnet,**
**dass** bei Verlängerung eines Oberbandabschnittes (2, 3) der der inneren Umlenkung (7, 8) nächste erste Walzenträger (13) der Verschiebung der inneren Umlenkung (7, 8), insbesondere mit Erreichen des maximalen Abstandes, als erstes folgt, während die anderen Walzenträger (13) zunächst unbewegt bleiben, wobei bei Erreichen des maximalen Abstandes der erste Walzenträger den zweiten Walzenträger mitnimmt.

6. Vorrichtung nach einem der vorherigen Ansprüche,
**dadurch gekennzeichnet,**
**dass** zwischen den Walzenträgern (13) Distanzstücke (17) vorgesehen sind, die bei Verkürzung des Oberbandabschnittes (2, 3) das Unterschreiten eines definierten minimalen Abstandes zwischen den Walzenträgern (13) verhindern.

7. Vorrichtung nach einem der vorherigen Ansprüche,
**dadurch gekennzeichnet,**
**dass** die Übergabestelle (6) mit den beiden insbesondere als Umlenkkanten ausgebildeten inneren Umlenkungen (7, 8) auf einem mittels eines Antriebes verschieblichen Träger (15) angeordnet ist, wobei eine Verschiebung des Trägers (15) eine Veränderung der Längen der Oberbandabschnitte (2, 3) bewirkt.

8. Vorrichtung nach Anspruch 7,
**gekennzeichnet durch**
zwei getrennte, die Oberbandabschnitte (2, 3) ausbildende Fördergurte, die jeweils von einer die äußere Umlenkung ausbildende Antriebswalze (9, 10) angetrieben werden, wobei der bei Veränderung der Länge der Oberbandabschnitte (2, 3) die sich in der Länge verändernden Unterbandabschnitte (4, 5) jeweils **durch** Spannmittel auf Spannung gehalten werden.

9. Vorrichtung nach Anspruch 8,
**dadurch gekennzeichnet,**
**dass** die Spannmittel jeweils eine am Ende eines verschwenkbaren Hebels (20) angeordnete Spannwalze (21) aufweisen, die in den Unterbandabschnitt (4, 5) eingreift, wobei die Hebel insbesondere mittels Federkraft zur Erzeugung der Spannung ausgelenkt werden.

## Claims

1. Device for the transportation of separated products (1) of in particular predetermined dimension in a direction of transport (A), wherein the device comprise two upper belt sections (2, 3) adjoining each other at a point of handover (6), the upper belt sections have a variable length in the direction of transport and extend each from an inner redirection (7, 8), formed at the point of handover (6), to an outer redirection (9, 10), formed at the other end,
**characterized in,**
**that** both upper belt sections (2, 3) are each supported by several supporting means (11), which are spaced to each other in direction of transport, wherein their distance changes along the variation of the length of the upper belt sections (2, 3).

2. Device according claim 1,
**characterized in,**
**that** the distance of the supporting means (11) are limited to a maximum distance.

3. Device according claim 1 or 2,
**characterized in,**
**that** the supporting means (11) comprise supporting drums (12), on which the respective upper belt section (2, 3) rests, wherein the die supporting drums (12) are each held rotatably on a drum support (13), which is guided in a guide (19) and slidable in the direction of transport.

4. Device according claim 3,
**characterized in,**
**that** the drum supports (13) of the drums (12), which support an upper belt section (2, 3), are coupled by follower means (14), which limit the distance between two coupled drum supports (13) to a maximum distance.

5. Device according claim 4,
**characterized in,**
**that** upon an elongation of an upper belt section (2, 3) the drum support (13), which is closest to the inner redirection (7, 8), follows the shifting of the inner redirection (7, 8) first of all, in particular upon achievement of the maximum distance, wherein the other drum supports (13) are initially unmoved, wherein upon achievement of the maximum distance the first drum support picks up the second drum support.

6. Device according to any of the preceding claims,
**characterized in,**
**that** separators (17) are provided between the drum supports (13), which upon shortening of the upper belt section (2, 3) prevent an underrun of a defined minimum distance between the drum supports (13).

7. Device according to any of the preceding claims,
**characterized in,**
**that** the point of handover (6) with both inner redirections (7, 8), in particular formed as redirection edges, is arranged on a support (15), which is shiftable by driving means, wherein the shifting of the support (15) causes a change in the length of the upper belt sections (2, 3).

8. Device according claim 7,
**characterized by**
two separated conveyor belts forming the upper belt sections (2, 3), which each are driven by a driving drum (9, 10) forming the outer redirection, wherein upon variation of the length of the upper belt sections (2, 3) the lower belt sections (4, 5), which are changing in length, are held in tension by tensioning means.

9. Device according claim 8,
**characterized in,**
**that** the tensioning means comprise a tensioning drum (21) arranged at the end of a tiltable lever (20), which engages the lower belt section (4, 5), wherein the lever is tilted for producing the tension in particular by spring force.

## Revendications

1. Dispositif destiné à transporter des produits désolidarisés (1), notamment de dimensions prédéfinies dans un sens de transport (A), le dispositif comportant deux parties de bande supérieure (2, 3) mutuellement adjacentes en une zone de transfert (6), qui ont une longueur variable dans le sens de transport et qui s'étendent chacune d'un renvoi (7, 8) intérieur conçu sur la zone de transfert (6) jusqu'à un renvoi (9, 10) extérieur conçu sur l'autre extrémité, **caractérisé en ce que** les deux parties de bande supérieure (2, 3) sont soutenues chacune par plusieurs moyen d'appui (11) écartés les uns des autres dans le sens de transport, dont les écarts se modifient avec la variation de la longueur des parties de bande supérieure (2, 3).

2. Dispositif selon la revendication 1, **caractérisé en ce que** les écarts des moyens d'appui (11) sont limités à un écart maximal.

3. Dispositif selon la revendication 1 ou la revendication 2, **caractérisé en ce que** les moyens d'appui (11) comportent des cylindres d'appui (12) sur lesquels repose la partie de bande supérieure (2, 3) concernée, les cylindres d'appui (12) étant maintenus chacun en étant rotatif sur un porte-cylindre (13) guidé dans un guidage (19) et déplaçable dans le sens de transport.

4. Dispositif selon la revendication 3, **caractérisé en ce que** les porte-cylindre (13) de l'un des cylindres (12) soutenant une partie de bande supérieure (2, 3) sont accouplés par l'intermédiaire de moyens d'entraînement (14) qui délimitent à la valeur de l'écart maximal l'écart concerné entre deux porte-cylindre (13) accouplés.

5. Dispositif selon la revendication 4, **caractérisé en ce que** lors d'un allongement de la partie de bande supérieure (2, 3), le premier porte-cylindre (13) le plus proche du renvoi intérieur (7, 8) suit en premier lieu le déplacement du renvoi intérieur (7, 8), notamment en atteignant l'écart maximal, alors que les autres porte-cylindre (13) restent d'abord statiques, à l'atteinte de l'écart maximal, le premier porte-cylindre entraînant le deuxième porte-cylindre.

6. Dispositif selon l'une quelconque des revendications précédentes, **caractérisé en ce qu'**entre les porte-cylindre (13) sont prévus des pièces d'écartement (17) qui lors du raccourcissement de la partie de bande supérieure (2, 3) empêchent la non-atteinte d'un écart minimal défini entre les porte-cylindre (13).

7. Dispositif selon l'une quelconque des revendications précédentes, **caractérisé en ce que** la zone de transfert (6) avec les deux renvois (7, 8) conçus notamment en tant qu'arêtes de renvoi est disposée sur un support (15) déplaçable au moyen d'un entraînement, un déplacement du support (15) provoquant une modification des longueurs des parties de bande supérieure (2, 3).

8. Dispositif selon la revendication 7, **caractérisé par** deux sangles de transports séparées, formant les parties de bande supérieure (2, 3) qui sont entraînées chacune par un cylindre d'entraînement (9, 10) formant le renvoi extérieur, les parties de bande inférieure (4, 5) qui se modifient dans leur longueur lors de la modification de la longueur des parties de bande supérieure (2, 3) étant maintenues chacune en tension par des moyens tendeurs.

9. Dispositif selon la revendication 8, **caractérisé en ce que** les moyens tendeurs comportent chacun un rouleau tendeur (21) placé sur l'extrémité d'un levier (20) pivotant qui s'engage dans la partie de bande inférieure (4, 5) les leviers étant déviés notamment au moyen d'une force élastique pour créer la tension.
